# EUROPÄISCHE PATENTSCHRIFT

(11) **EP 0 805 382 B1**
(45) Veröffentlichungstag und Bekanntmachung des Hinweises auf die Patenterteilung: **27.10.1999**
(21) Anmeldenummer: 97107317.6
(22) Anmeldetag: 02.05.1997
(51) Int. Cl.: G05B 19/406

(54) **Diagnoseeinrichtung für elektronisch gesteuerte Maschine, deren Betriebszustände erfasst und nach vorgegebenen Schlüsseln verknüpft werden**
Diagnostic apparatus for an electronically controlled machine in which detected operating conditions are combined according to keys
Dispositif de diagnostique pour une machine à commande électronique avec clés de combinaison d'états mesurés de la machine

(30) Priorität: 02.05.1996 DE 19617620
(43) Veröffentlichungstag der Anmeldung: 05.11.1997
(73) Patentinhaber: Traub Drehmaschinen GmbH, 73262 Reichenbach (DE)
(72) Erfinder: Osswald, Ernst, 73262 Reichenbach (DE); Straubinger, Werner, 89331 Burgau-Oberknöringen (DE); Heinrich, Andreas, 73432 Waldhausen-Lorch (DE)
(74) Vertreter: Schmidt, Steffen J., Dipl.-Ing.

(56) Entgegenhaltungen:
- EP-A- 0 418 787
- US-A- 3 795 916

## Beschreibung

Die vorliegende Erfindung betrifft eine Diagnoseeinrichtung für wenigstens eine elektronisch gesteuerte Maschine, insbesondere eine CNC-Werkzeugmaschine, eine flexible Fertigungszelle oder dergl.

Derartige Maschinen haben entweder eine Rechnereinheit, eine Speichereinheit, eine Eingabeeinheit und eine Ausgabeeinheit, oder sie sind damit betrieblich verbunden. Die Herstellungsgenauigkeit und die Betriebszuverlässigkeit moderner CNC-Werkzeugmaschinen oder flexibler Fertigungszellen sind sehr hoch. Betriebsstörungen oder Abweichung von vorgegebenen Fertigungstoleranzen treten daher sehr selten auf, können jedoch nicht ausgeschlossen werden. Ursachen hierfür sind natürlicher Verschleiß, Annäherung an Prozeßgrenzen oder Prozeßsicherheit, sowie sporadische Fehler in einzelnen Komponenten der Maschine. Störungen und Ausfälle kommen zwar vergleichsweise selten vor, können jedoch beträchtliche Auswirkungen auf den Produktionsablauf haben. Dies wird insbesondere bei verketteten Herstellungsprozessen deutlich. Außerdem verbieten wirtschaftliche Gründe vielfach, redundante Produktionsmittel bereitzuhalten. Deshalb müssen Ursachen von Störungen und Ausfällen möglichst schnell erkannt und behoben werden können. Dies ist jedoch bei komplexen Systemen mit geringer Störungshäufigkeit und Fehlerwiederholrate sehr schwierig.

In der betrieblichen Praxis sind sogenannte Offline-Diagnosegeräte bekannt, die über Schnittstellen an die Maschine angeschlossen werden, um nach einer Störung in der Maschine oder ihrer Steuerung aufgetretene Fehlerzustände abzufragen. Eine derartige Fehlersuche und Störungsbeseitigung ist insbesondere bei der Erstinbetriebnahme zweckmäßig. Für sporadisch auftretende Fehler oder bei Langzeitschwankungen ist diese Vorgehensweise wenig geeignet, da sie zum Zeitpunkt der Fehlererfassung nicht diagnosebereit ist und auch bereits durch das Anschließen und die Inbetriebnahme einer derartigen Diagnoseeinrichtung ein erheblicher Eingriff in das System erfolgt. Damit kann nicht ausgeschlossen werden, daß Daten oder Zustände in dem System verändert werden, so daß ggf. auch für die Störung relevante Daten nicht als solche erkannt werden können.

In die Steuerung der Maschine integrierte "Online-Diagnosemittel" können bestimmte Daten erfassen und Fehlerzustände sichtbar machen, in dem während des Betriebes der Maschine kritische Daten auf einer Anzeige dargestellt werden. Dies kann sowohl die Darstellung auf einzelnen Anzeigen (Drehzahlmesser, Temperaturmesser, Signalmittel für Bereichs-über- oder Unterschreitungen, etc.), oder durch Darstellen mehrerer (auch in Relation zueinander stehender) Meßgrößen auf einem gemeinsamen Bildschirm sein. Hierbei werden zwar keine Eingriffe in das System erforderlich, sporadisch auftretende Fehler können jedoch nur dann gefunden werden, wenn während des Fehlerauftritts auch die richtigen Meßgrößen erfaßt und beobachtet wurden. Die Fehlersuche ist damit sehr schwierig.

Üblicherweise wird daher bei herkömmlichen CNC-Werkzeugmaschinen für den jeweiligen Fehlerfall (nachdem er zumindest einmal aufgetreten ist) ein spezielles Programm (Fangsoftware) geschrieben um den Fehler, sollte er in identischer Weise noch einmal auftreten, zu erkennen. Allerdings gewährleistet diese Vorgehensweise nicht, daß das Programm tatsächlich den Fehler erfaßt, so daß vielfach mehrere Fehlervorfälle und sukzessiv angepaßte Programme notwendig sind.

Ein spezielles on-line Verfahren zur Überwachung von Bearbeitungsprozessen bei Werkzeugmaschinen ist in EP 0 418 787 A beschrieben.
Mit Hilfe von mathematischen Modellierungen können quantitative Aussagen über die Zusammenhänge zwischen Parametern des Bearbeitungsprozesses bzw. der Werkzeugmaschine und den an der Werkzeugmaschine selbst zu messenden Größen gemacht werden. Auf diese Weise kann eine Bewertung des Bearbeitungsprozesses vorgenommen werden. Hier werden unter Verwendung der bei der CNC-Steuerung der Maschine ohnehin vorhandenen Meßsignale die digitalen Signale erzeugt, die zur Lösung der entsprechenden Differentialgleichungen der mathematischen Modellierung notwendig sind. In dem hier beschriebenen Ausführungsbeispiel wird ein Modell verwendet, das die Zusammenhänge zwischen Vorschubkraft und Vorschubgeschwindigkeit während des Bearbeitungsprozesses beschreibt. Solange keine Bearbeitung des Werkstücks erfolgt, sind auch keine Aussagen über den Betriebzustand der Maschine möglich. D.h. vor oder nach dem eigentlichen Bearbeitungsprozeß kann keine Diagnose durchgeführt bzw. können fehlerhafte Betriebszustände nicht erkannt werden. So können beispielsweise Störungen oder Ereignisse, die zu Fehlern führen können, beim Anschnitt des Werkstücks nicht erkannt werden, obwohl diese Phase einen kritischen Betriebsablauf darstellt, die die Qualität der folgenden Bearbeitung maßgeblich beeinflussen kann (z.B. führt eine Beschädigung des Bearbeitungswerkzeugs beim Anschnitt zu einer schlechten Bearbeitungsgüte des Werkstücks).

Des weiteren erfordert die Anwendung einer mathematischen Modellierung in Form von Differentialgleichungen eine Tiefpaßfilterung der erfaßten Signale, bevor aus diesen Signalen die Daten zur Lösung der Differentialgleichungen berechnet werden können. Die mathematischen Modelle in Form einer Differentialgleichung bestehen aus endlichen Reihen von Variablen und Parametern, die hier aus den erfaßten Signalen errechnet werden. Beinhalten diese Signale Frequenzanteile, die einen bestimmten Bereich überschreiten, kann dies zu Instabilitäten des Verfahrens führen, da in diesen Fällen eine Lösung der Differentialgleichungen nicht mehr möglich ist. Die notwendige Tiefpaßfilterung filtert hochfrequente Signalverläufe oder stochastische Änderungen aus den zu erfassenden Signalen. Daher werden mit diesem Verfahren solche Signale bzw. die entsprechenden Betriebszustände nicht berücksichtigt. So führen z.B. Schwingungen am Bearbeitungswerkzeug bzw. die daraus resultierenden hochfrequenten Änderungen in der Schnitt- oder Vorschubkraft zu einer reduzierten Oberflächengüte des Werkstücks. Derartige Störungen bzw. Fehler werden mit diesem Verfahren nicht erkannt.

Eine nachträgliche Rekonstruktion der real auftretenden Signale zur Fehlerdiagnose ist mit diesem Verfahren nicht möglich, da die Signale on-line verarbeitet werden und nur als Variablen bzw. Parameter der Differentialgleichungen vorliegen. Eine solche Rekonstruktion der realen Signalverläufe wäre aber die Voraussetzung zur Erkennung von fehlerhaften Betriebsverläufen, die durch das mathematische Modell nicht beschrieben werden.

Nach der Berechnung der Parameter des Bearbeitungsprozesses findet eine Bewertung dieser Parameter statt, um so quantitative Aussagen über den Bearbeitungsprozeß machen zu können. Die Bewertung der errechneten Parameter bzw. Parameteränderungen erfolgt durch einen Vergleich mit vorgegebenen Sollparametern bzw. mit vorgegebenen Änderungen der Sollparameter. Diese Bewertung kann durch die Anwendung von heuristischen Verfahren auf der Basis von heuristischem Wissen über den Bearbeitungsprozeß ergänzt werden. Mit entsprechenden Interferenzmechanismen werden die errechneten Parameter einer weiteren Bewertung unterworfen. Die Gültigkeit dieser Bewertungen - sowohl auf der Basis des mathematischen Modells als auch auf der Basis einer zusätzlichen Anwendung heuristischer Verfahren - beschränkt sich jedoch auf die gefilterten Meßgrößen. Bewertende Aussagen über die real auftretenden Größen bzw. die entsprechenden Betriebsverläufe können nicht gemacht werden.

Zusätzlich setzt eine Fehlerdiagnose mit diesem Verfahren voraus, daß Informationen über den Zusammenhang zwischen den errechneten Parametern und den Referenzgrößen im Fehlerfall vorliegen. D.h. es können nur solche Fehler erkannt werden, die schon einmal aufgetreten sind und/oder analysiert wurden. Fehler, die noch nie aufgetreten sind oder nur sporadisch bzw. stochastisch auftreten, können auf diese Weise nicht erkannt oder rekonstruiert werden.

Ausgehend hiervon liegt der Erfindung die Aufgabe zugrunde, eine Diagnoseeinrichtung bereitzustellen, die nicht nur spezielle Betriebszustände (z.B. den Bearbeitungsprozeß) überwacht, sondern eine Überwachung aller Betriebszustände des maschinellen Arbeitssystems ermöglicht.
Dabei umfaßt das maschinelle Arbeitssystem alle Elemente der Werkzeugmaschine (incl. der Steuerung und Software), alle mit dieser Maschine durchgeführten Arbeitsabläufe (z.B. Anfahren, Werkzeuganstich, Leerlauf) sowie mit der Maschine betrieblich verbundene Geräte. Um eine Bewertung der real aufgetretenen Größen vornehmen zu können, sollen alle verfügbaren Daten und Signale, die zum Betrieb der Maschine notwendig sind, erfaßt und nicht durch eine Datenbearbeitung - z.B. durch eine Tiefpaßfilterung - in ihrem Informationsgehalt reduziert werden. Auf diese Weise soll eine Analyse aller Betriebsabläufe, der erfaßten Größen und vor allem deren Korrelation - auch nach dem Betrieb der Maschine (off-line) - möglich werden. Diese Analyse setzt weder die Existenz mathematischer Modellierungen einzelner Betriebszustände noch die Existenz von a-priori Wissen über die Zusammenhänge der erfaßten Größen und den entsprechenden Betriebszuständen (z.B. in Form von Sollgrößen) voraus.

Zur Lösung nutzt die Diagnoseeinrichtung eine Rechnereinheit, eine Speichereinheit, eine Eingabeeinheit und eine Ausgabeeinheit aus, wobei die Eingabeeinheit mit Aufnenmern verbunden ist, die analoge und/oder digitale Betriebszustände der Maschine erfassen, diese in entsprechende Signale umsetzen und der Rechnereinheit zuführen, die Recheneinheit ihr zugefügte Signale mit vorgegebenen Schlüsseln verknüpft und die Verknüpfungsergebnisse der Speichereinheit und/oder der Ausgabeeinheit zuführt, und wobei die Betriebszustände in Zeitabständen erfaßbar sind, durch die sichergestellt ist, daß für den Betrieb der Maschine relevante Ereignisse und/oder Störungen in entsprechende Signale umgesetzt und der Rechnereinheit zugeführt werden.

Dabei liegt der Erfindung die Erkenntnis zugrunde, daß in der Maschine sowohl digitale Zustände (Ein-/Ausgangssignale, Inhalte von Speicherzellen, innerhalb der Maschinensteuerung übermittelte Daten, Befehle etc.) und auch analoge Signale (Strom, Spannung, Drehzahl, Temperatur, Kräfte etc.) aufgezeichnet werden. Grundsätzlich könnten dabei sämtliche Zustände in der Maschine und/oder in ihrer Steuerung auftretende Größen erfaßt werden. Da dies jedoch mit vertretbarem Aufwand nicht realisierbar ist und auch nicht alle Größen relevant sind, werden nur bestimmte Größen erfaßt und ausgewertet. Dabei handelt es sich um solche Größen, die als Ursache für einen Fehler in Frage kommen. Mit Hilfe geeigneter Schlüssel werden die relevanten Größen bzw. die sie wiedergebenden Signale verknüpft und in einen funktionalen und/oder zeitlichen Zusammenhang gesetzt. Damit wirken die Schlüssel als Filter im Sinne einer Datenauswahl, um eine (weitere) Reduktion der erfaßten Betriebszustände der Maschine, also der analogen und/oder digitalen Größen zu erzielen. Die durch die Schlüssel oder Filter ausgewählten Größen werden abgespeichert, ohne daß es zu einem Eingriff in die Struktur der CNC-Werkzeug-maschine bzw. ihrer elektronischen Steuerung kommt. Dabei ist die Datenaufzeichnung so organisiert, daß Art, Inhalt, zeitlicher und funktionaler Bezug sowie die Abhängigkeiten der einzelnen Größen zueinander durch einfache Parametervorgabe konfiguriert werden können. Änderungen im System oder dessen Struktur sind damit nicht notwendig. Vielmehr werden eingebaute Mechanismen aktiviert. Wenn dabei die erfaßten Größen vor oder nach der Verknüpfung mit den Schlüsseln mit einer Zeitmarke versehen werden, die ihren Erfassungszeitpunkt wiedergibt, kann die so ergänzte Größe auch später eindeutig ausgewertet und zu anderen Größen in zeitlichen und funktionalen Bezug gesetzt werden. Die Analyse kann damit Off-line erfolgen, während die Erfassung in Echtzeit (On-line) geschieht.

Da bei modernen CNC-Maschinen die Steuerungseinheit einen Prozessrechner hat, werden einzelne Steuerungsaufgaben in Echtzeit abgearbeitet, indem sie in einzelne Tasks, vorzugsweise mit abgestufter Priorität, aufgeteilt werden.

Zur Realisierung der Erfindung ist es nun möglich, die beim Abarbeiten jeder Task anfallenden erfaßten Meßgrößen oder errechneten Ergebnisse mit den Schlüsseln zu verknüpfen, mit einer Zeitmarke zu versehen und abzuspeichern.

Dazu ist in den einzelnen Tasks ein Aufruf einer entsprechenden Routine vorzusehen, der für alle Tasks übereinstimmend sein kann. Da die jeweilige Task mit einem Teil oder einer vollständigen Diagnoseeinrichtung versehen ist, kommt es insgesamt praktisch zu keinen Veränderungen des Gesamtverhaltens der CNC-Steuerung. Alternativ dazu kann auch eine Task mit der höchsten Prioritätsstufe die in Tasks mit niedrigerer Priorität anfallenden Daten und Meßgrößen mit den jeweiligen Schlüsseln verknüpfen, mit Zeitwerten versehen und abspeichern. Durch die einzelnen Schlüssel kann dann die erforderliche Auswahl der relevanten Daten erfolgen.

Die Filter oder Schlüssel können dabei sehr komplex aufgebaut sein, so daß der Fehlerzustand durch ein möglichst geringes Datenvolumen dargestellt und identifiziert werden kann.

Vorzugsweise werden für den Betrieb der Maschine fehlerrelevante Ereignisse und/oder Störungen zeitgleich erfaßt. Eine Auswahl, zeitliche und funktionale Zuordnung kann anschließend durch die Verknüpfung mit den Schlüsseln erzielt werden. Wenn die Aufzeichnung der analogen und/oder digitalen Betriebszustände der Maschine in Echtzeit erfolgt und auch analoge und digitale Größen synchron erfaßt werden und Zeitmarken mitgeführt werden, ist es möglich, die Auswertung, Abspeicherung und Darstellung ggf. zeitlich nacheinander auszuführen, ohne daß die zeitliche Zuordnung der Signale und die Möglichkeit einer entsprechenden späteren Auswertung verloren geht. Dies reduziert auch die erforderliche Rechnerkapazität.

Vorzugsweise werden die Schlüssel oder Filter so festgelegt, daß sie in zeitlichem und funktionalem Zusammenhang mit den für den Betrieb der Maschine fehlerrelevanten Ereignissen und/oder Störungen stehen. Damit ist es möglich den Zeitpunkt und die Dauer der Datenaufzeichnung durch in dem Herstellungsprozeß auftretende Größen zu steuern.

Erfindungsgemäß erfassen die Aufnehmer für den Betrieb der Maschine relevante Ereignisse und/oder Störungen synchron mit in der Maschine auftretenden Betätigungssignalen für Aktoren oder Betriebsmittel der Maschine. Da eine elektronisch gesteuerte Maschine, beispielsweise eine CNC-Werkzeugmaschine taktgesteuert arbeitet, können zwischen die Taktintervalle fallende Störsignale, die kürzer sind als einzelne Taktintervalle, praktisch keinen Einfluß auf die Prozeßsteuerung haben. Falls Störungen so lange andauern, daß sie in ein aktives Taktintervall fallen, werden sie auch erfaßt und können ausgewertet und lokalisiert werden.

Insbesondere zur Lokalisierung komplexer Fehlerzustände ist es vorteilhaft, wenn die Aufnehmer für den Betrieb der Maschine relevante Ereignisse und/oder Störungen der elektronischen Steuerung der Maschine, der Maschine selbst oder von mit der Maschine oder ihrer elektronischen Steuerung betrieblich verbundenen weiteren Geräten erfassen. Dies gilt insbesondere für Komponenten verketteter Anlagen.

Bevorzugt weist die Diagnoseeinrichtung ein einen Herstellungsprozeß überwachendes Beobachtermodul, ein die Schlüssel festlegendes Konfiguratormodul, ein Ergebnisspeichermodul und ein Auswertungsmodul auf.

Dabei kann das Beobachtermodul sämtliche Steuerdaten zeit- oder ereignisgesteuert überwachen. Das Konfiguratormodul kann in die Schlüssel oder Filter in Abhängigkeit von einer Überwachungskriterien enthaltenden Konfigurationsdatei erstellen. Da die Speicherkapazität des Ergebnisspeichermoduls nicht unbegrenzt sein kann, werden Datensätze, die zeitlich am längsten zurückliegen, ohne daß in diesem Zeitraum ein Fehler aufgetreten wäre, gelöscht. Vorzugsweise ist dazu der Speicher als First-In-First-Out-(FIFO)-Speicher organisiert. Zusätzlich kann ein Permanentspeichermedium (Platte, Diskette oder dergl.) für Langzeitmessungen vorgesehen sein. Abgesehen von dem Zeitfaktor als Kriterium für eine Löschung von Daten kann auch in Abhängigkeit von anderen Kriterien (Veränderung innerhalb aufeinanderfolgender Datensätze, abgeschlossener Herstellungsabschnitt oder dergl.) die Löschung von Daten aus dem Speicher erfolgen.

Das Auswertungsmodul kann Betriebszustände, für den Betrieb der Maschine relevante Ereignisse und/oder Störungen, sowie Ergebnisse von Verknüpfungen mit Schlüsseln so anzeigen, daß der zeitliche Zusammenhang wieder hergestellt und synchron dargestellt (visualisiert) werden kann. Ferner lassen sich daraus Kennfelder (Kennkarten) von Zuständen erstellen und mit Toleranzfenstern abspeichern (auf Datenträger oder über Fernübertragung), so daß über längere Zeiträume mit Hilfe statistischer Methoden Verschleißtrends überwacht und das Annähern an Grenzen festgestellt werden kann. Daraus können dann frühzeitig vorbeugende Wartungsmaßnahmen und Wartungsplanungen abgeleitet werden.

Bevorzugt werden in der elektronischen Steuerung der Maschine vorhandene Betriebsmittel zur Realisierung der Komponenten: Ergebnisspeichermodul, Auswertungsmodul, und/oder Beobachtermodul genutzt. Dies hat den Vorteil, daß zum einen weniger Hardware benötigt wird. Zum anderen ist eine geschlossene und einheitliche Realisierung des Gesamtsystems möglich. Dies erleichtert die Fehlersuche. Alternativ dazu kann aber auch bei Maschinen, deren elektronische Steuerung dies aus den unterschiedlichsten Gründen nicht zuläßt, eine getrennte Realisierung, d.h. in separater Hardware erfolgen, die dann aber über entsprechend leistungsfähige Datenkanäle (z.B. BUS-Systeme) und zugehörige Treiber miteinander verbunden sind.

Vorzugsweise werden Betriebszustände, für den Betrieb der Maschine relevante Ereignisse und/oder Störungen in Abhängigkeit von jeweiligen analogen oder digitalen Signalpegeln und/oder Signalflanken aufgezeichnet.

Die Auswertung bzw. die Konfigurierung der Schlüssel oder Filter erfolgt unter Zugrundelegung von Boole'scher Logikregeln oder von Fuzzy-Logikregeln.

Dabei legt das Konfiguratormodul die Schlüssel oder Filter so fest, daß aufzuzeichnende Signale in der Abhängigkeit von ihrer Art, ihrem Inhalt, ihrem funktionalen oder zeitlichen Bezug zu anderen Ereignissen in der Maschine, oder in mit weiteren mit der Maschine verbundenen Geräten bestimmt werden. Das Konfiguratormodul bestimmt dabei die Schlüssel so, daß aufzuzeichnende digitale und zugehörige analoge Signale zeitgleich erfaßt werden. In ähnlicher Weise wie bei einer Datenbank, die nach bestimmten Kriterien (Suchschlüssel) durchsucht wird, erlaubt die Erfindung zeitbezogene Suche und Analyse von Ereignissen in CNC-Maschinen.

Die zur Realisierung der Diagnoseeinrichtung erforderlichen Betriebsmittel sind ohne ändernde Eingriffe in die Struktur der Maschinensteuerung aktivierbar, da sie vorzugsweise in die elektronische Steuerung der Maschine integriert sind.

Durch eine Datenfernübertragungseinrichtung können einzelne Komponenten der Diagnoseeinrichtung aktiviert oder deaktiviert, konfiguriert oder abgefragt werden. Dadurch ist Diagnose von sporadischen Fehlern auch durch Fernübertragung möglich. Mit üblichen Methoden ist dies nicht machbar, da Fernübertragungseinrichtungen nach deren Zeitintervallsteuerungen arbeiten, die in jedem Fall asynchron zur Zeitsteuerung des CNC-Rechners und mit Sicherheit langsamer sind. Da die Daten aber ihre Zeitrasterinformation mittragen ("aufgestempelt" haben), ist der zeitlich synchrone Bezug jederzeit rekonstruierbar.

Nachstehend wird anhand von Ausführungsbeispielen die Erfindung in weiteren Einzelheiten erläutert, wobei zusätzliche Eigenschaften, Merkmale oder Vorteile verdeutlicht werden.
- Fig. 1: zeigt ein schematisches Blockdiagramm einer erfindungsgemäßen Diagnoseeinrichtung.
- Fig. 2: veranschaulicht den Zusammenhang zwischen der erfindungsgemäßen Diagnoseeinrichtung und einer beispielhaften Fehlersituation.
- Fig. 3, 5 und 6: zeigen Bildschirmenues beim Dialog mit der erfindungsgemäßen Diagnoseeinrichtung zur Erfassung und Lokalisierung von Fehlersituationen.
- Fig. 4: zeigt in schematischer Darstellung die Wiedergabe der Daten von Fig. 5.

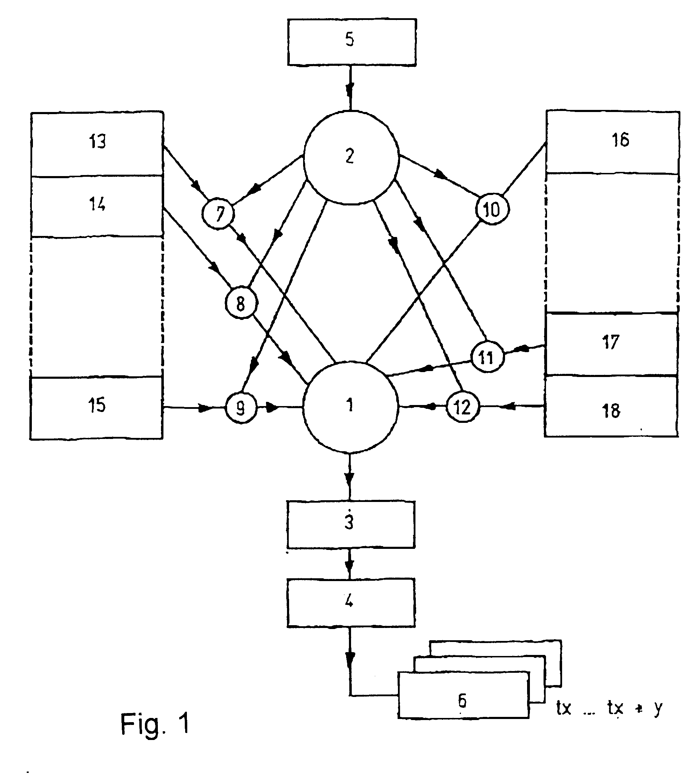

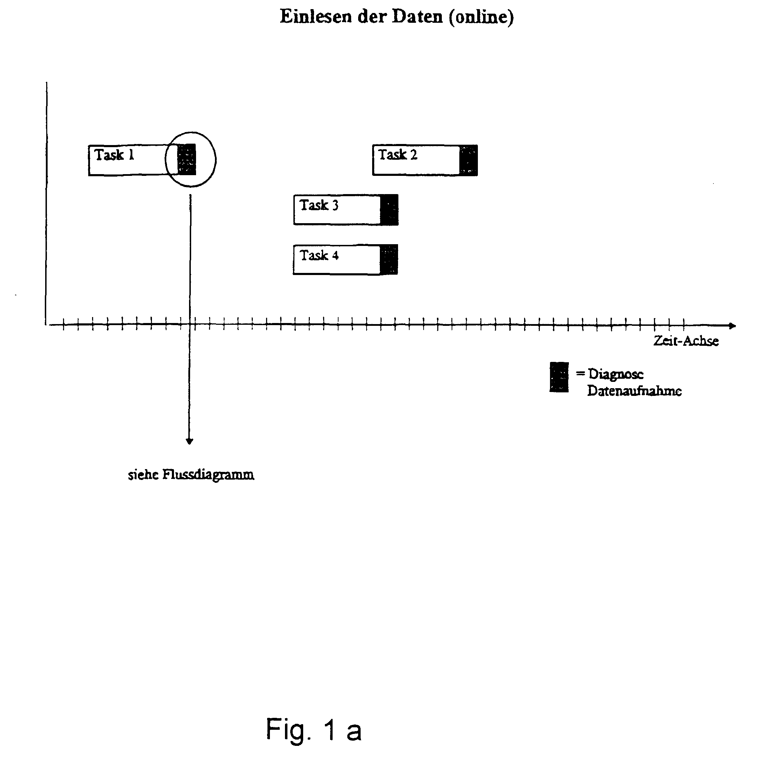

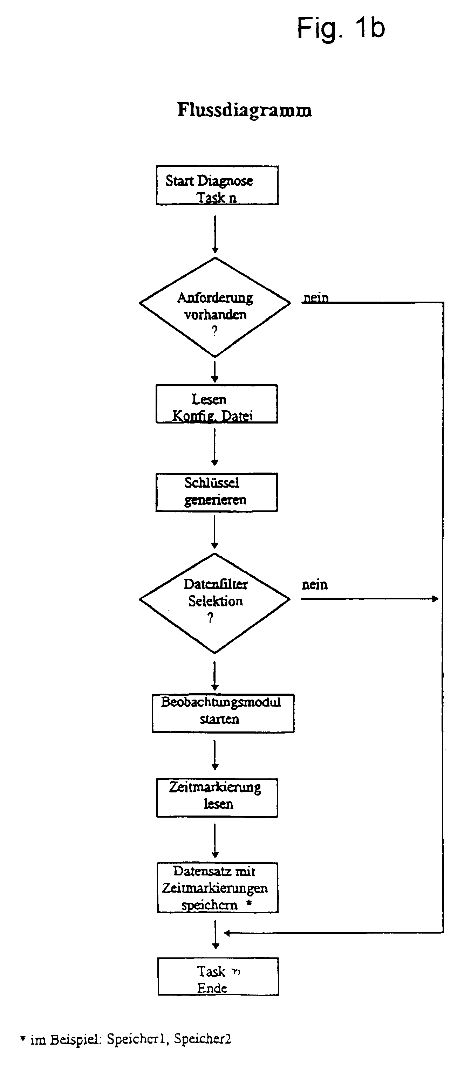

Wie in Fig. 1 veranschaulicht, werden einem Beobachtermodul 1 durch eine Vielzahl von Schlüsseln 7 bis 12 gefilterte Daten oder Signale 13 bis 18 zugeführt, die für Betriebszustände einer CNC-Werkzeugmaschine charakteristisch sind. Die Schlüssel oder Filter 7 bis 12 werden dabei durch ein Konfiguratormodul 2 so festgelegt, daß sie in zeitlichem und/oder funktionalem Zusammenhang mit den für den Betrieb der Maschine fehlerrelevanten Ereignissen und Störungen stehen. Das Beobachtermodul 1 führt die mit den Schlüsseln verknüpften Daten einem Speichermodul 3 zu. Das Speichermodul 3 kann zur Auswertung der Daten mit einem Auswertungsmodul 4 abgefragt werden. Das Konfiguratormodul 2 wird durch eine Konfigurationsdatei 5 gespeist, in dem Überwachungskriterien enthalten sind, so daß das Konfiguratormodul 2 die Schlüssel 7 bis 12 so festlegen kann, daß aufzuzeichnende Signale oder Daten aus dem Betrieb der CNC-Werkzeugmaschine in Abhängigkeit von ihrer Art, ihrem Inhalt, ihrem funktionalen oder zeitlichen Bezug zu anderen Ereignissen bestimmt werden. Zusätzlich können Kennkarten 6 erstellt werden, in denen Datensätze aufgezeichnet werden. Dies ermöglicht neben der Qualitätssicherung auch Langzeitdiagnosen durch eine regelmäßige Wiederholung der Anfertigung von Kennkarten mit anschließendem Vergleich. Damit können Kriterien für ein Frühwarnsystem für eine vorbeugende oder ereignisgesteuerte Wartungsplanung gefunden werden.

Das Konfiguratormodul 2 legt die Schlüssel anhand von Boole'schen Logikregeln (UND, ODER, NICHT, etc.) fest. Alternativ dazu können auch Fuzzy-Logikregeln implementiert werden. Die Schlüssel 7 bis 12 in Fig. 1 werden jeweils auf einen analogen oder digitalen Betriebszustand der Maschine angewendet bevor sie dem Beobachtermodul 1 zugeführt werden. Da die Schlüssel oder Filter 7 bis 12 jedoch auch in Abhängigkeit voneinander festgelegt werden können, ist es möglich auch Ereignisse mit komplexen Voraussetzungen zu erfassen und dem Beobachtermodul 1 zuzuführen. In dem Beobachtermodul 1 wird die Datenform und die zeitliche Zuordnung der gefilterten Daten oder Signale für die Speicherung in dem Speichermodul 3 organisiert. Bei der Abspeicherung der Daten wird jeweils ein Zeitwert (Time stamp) mit abgelegt, so daß eine Analyse zu einer späteren Zeit im Vergleich zu anderen Daten (und deren Zeitwert) möglich ist.

Die einzelnen Betriebszustände (Ein-/Ausgänge, Inhalte von Speicherzellen, Daten, Befehle, etc.) der CNC-Werkzeugmaschine werden durch die erfindungsgemäße Diagnoseeinrichtung in einem vorbestimmten Zeitraster (z.B. von wenigen Millisekunden) erfaßt, gefiltert und ggf. zusammen mit einer Zeitmarke gespeichert. Damit können auch Daten aus unterschiedlichen Prioritätsebenen einander zugeordnet und zeitlich korreliert ausgewertet werden. Im gleichen Zeitraster können auch alle analogen Vorgänge (Strom, Drehzahl, Temperatur, Kräfte, etc.) erfaßt, gefiltert und den entsprechenden digitalen Daten zeitlich zugeordnet und gespeichert werden. Das Speichermodul 3 ist als FIFO-Speicher organisiert, so daß zeitlich am längsten zurückliegende Daten gelöscht werden.

Die erfindungsgemäße Diagnoseeinrichtung ist in der Steuerung der CNC-Werkzeugmaschine dadurch implementiert, daß die einzelnen Funktionen in jeder Task der Steuerungssoftware vorhanden ist oder während der Abarbeitung jeder Task aufgerufen werden können. Wie in Fig. la veranschaulicht, wird dazu z.B. an jede Task des üblichen Steuerungsprogramms ein eigenes Diagnosemodul angefügt, das für die Datenaufnahme, Datenselektion und Abspeicherung mit der Zeitmarke sorgt. Da jede einzelne Task des Steuerungsprogrammes über diese Funktion verfügt, kann die Datenerfassung in Echtzeit erfolgen. Der Programmablaufplan des jeweiligen Diagnosemodells ist in Fig. 1c veranschaulicht.

Nachdem die jeweilige Task n als solche abgearbeitet ist, wird das zugehörige Diagnosemodul aufgerufen. Zunächst werden aus der Konfigurationsdatei 5 die Überwachungskriterien ausgelesen und daraus die Schlüssel generiert. Anschließend werden die in der jeweiligen Task angefallenen Daten mit den erzeugten Schlüsseln verknüpft und festgestellt, ob relevante Daten aufzuzeichnen sind. Das Beobachtermodul versieht die aufzuzeichnenden Daten mit der aktuellen Zeitmarke und speichert diese Daten zusammen mit der Zeitmarke ab.

Es versteht sich, daß das Diagnosemodul auch während der Abarbeitung einer Task (mehrfach) aufgerufen und abgearbeitet werden kann. Dies kann entweder interruptgesteuert oder durch programmgesteuerte Anrufe des Diagnosemoduls im Verlauf der jeweiligen Task erfolgen. Der Zeitabstand zwischen zwei Aufrufen des Diagnosemoduls jeder Task ist dabei so kurz, daß sichergestellt wird, alle relevanten Ereignisse in dem Prozeß zu erfassen. Außerdem kann die Generierung der Schlüssel auch im Rahmen einer Initialisierung erfolgen, so daß dies nicht während des Programmablaufs (in Echtzeit) zu erfolgen hat.

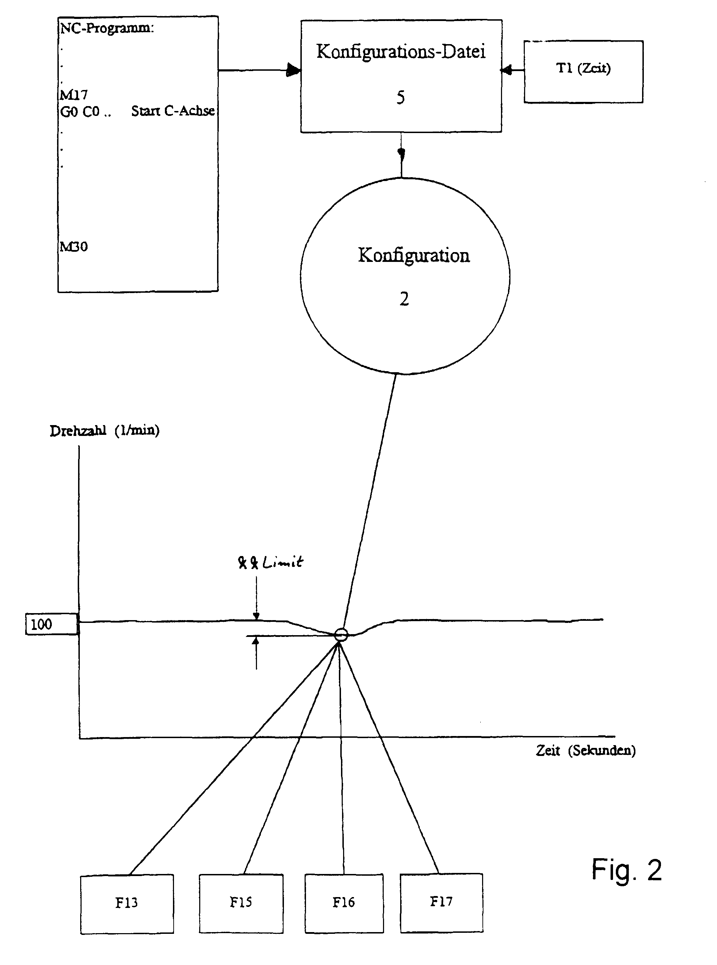

In Fig. 2 ist als einfaches Beispiel die Diagnose von sporadischen Drehzahleinbrüchen der C-Achse einer CNC-Werkzeugmaschine erläutert.

In der Konfigurationsdatei 5 wird festgelegt, in welchem Bereich des NC-Programms das Beobachtermodul 1 aktiv sein soll. Außerdem wird das Zeitraster der Datenerfassung (und damit auch die Aufzeichnungsgeschwindigkeit) festgelegt. Des weiteren müssen die Kriterien festgelegt werden, die eintreffen müssen, damit die Aufzeichnung gestartet wird. Als Beispiels soll die Drehzahl der C-Achse überwacht werden und bei einem Abweichen der Drehzahl um einen Toleranzwert (&& Limit) unter eine bestimmte Grenze (100 Umdrehungen/min) aufgezeichnet werden. Des weiteren enthält die Konfigurationsdatei 5 Informationen, die das Konfiguratormodul 2 in die Lage versetzen, Schlüssel oder Filter zu erzeugen, um aus der Gesamtheit der in der CNC-Werkzeugmaschine und ihrer Steuerung anfallenden Daten die für den vorliegenden Anwendungsfall notwendigen und hinreichenden Daten aus den Funktionsmodulen und deren zeitlichem Bezug zu sichern und zu extrahieren: Stromaufnahme der C-Achse, Drehzahl der C-Achse, Temperatur der C-Achse sowie digitale Steuersignale für die C-Achse.

Dem entsprechend wird die Konfigurationsdatei ein Programm mit folgender Funktion enthalten:
IF (Start C-Achse && LIMIT SC < 100 Umdrehungen)
→ Speichern Daten Strom C-Achse
Speichern Daten Temperatur Motor C-Achse
Speichern Daten Drehzahl C-Achse
Speichern Daten digitale Signale der C- Achsenansteuerung.

Diese Programmfunktion wird aktiv, sobald in dem NC-Programm der Maschine der Befehl G0 C0 (Start C-Achse) erreicht wird. Das Zeitintervall zwischen zwei Abfragen wird durch die Zeit TI festgelegt.

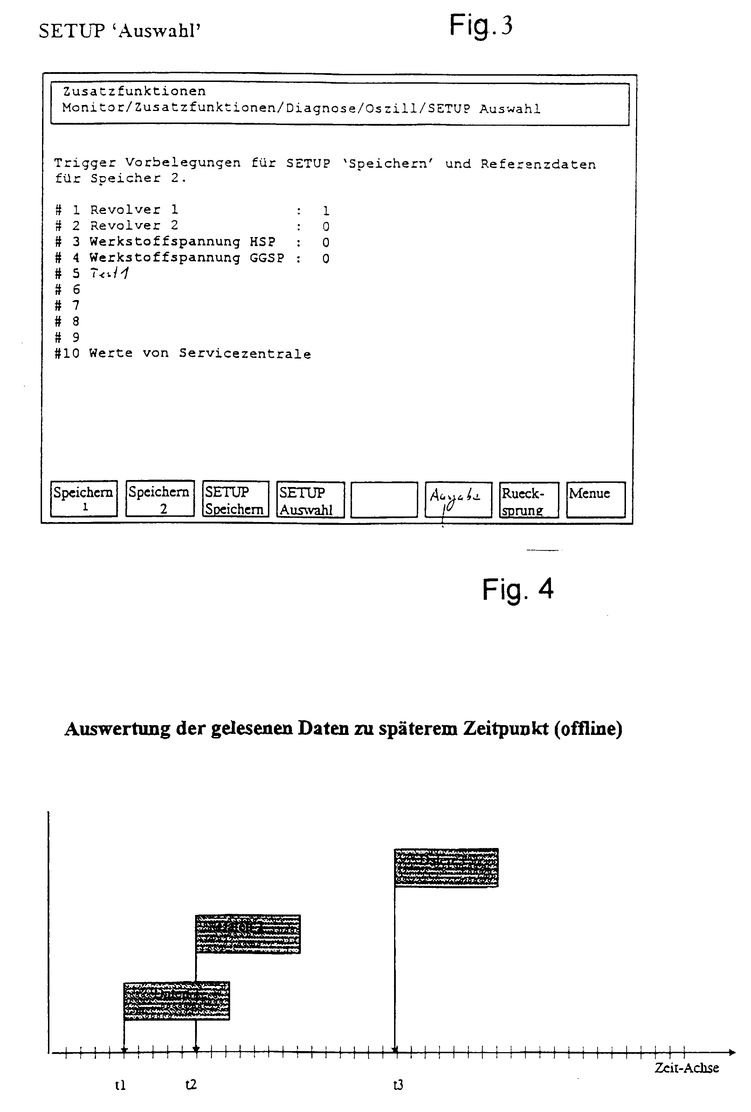

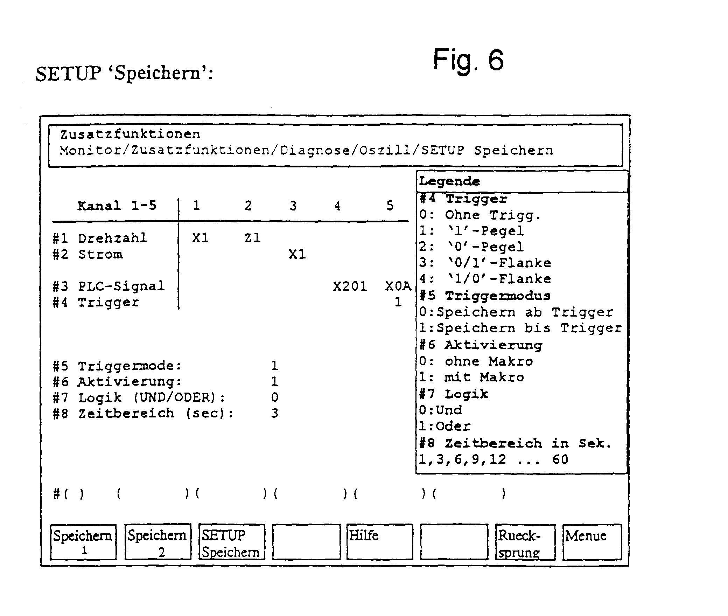

Fig. 3 zeigt ein Menue - SETUP "AUSWAHL". Das Menue bietet eine Einstellhilfe für die Diagnose unterschiedlicher Maschinenfunktionen. Dabei werden Triggervorbelegungen für das Menue SETUP "SPEICHERN" (siehe Fig. 6) von einem internen Speicher der elektronischen Steuerung der CNC-Werkzeugmaschine geladen. Entsprechende Referenzkurven sind in einem Speicher verfügbar.

Im vorliegenden Beispiel dient die Diagnose #1 dazu, die Aktivierung des Revolvers 1 zu überwachen. Alle Einstellungen zur Diagnose der Revolverfunktion werden im Menue SETUP "SPEICHERN" geladen. Die entsprechenden Referenzkurven aus vorher gemesse nen korrekten Revolverfunktionen werden in einen zweiten Speicher geladen.
→ Softkey "Speicher 1" anwählen.
→ Die Hinweismeldung "H...Diagnose speichern 1" erscheint.
→ Den Revolver im F0 Bild schalten.
→ Softkey "Anzeigen 1" anwählen, um die aufgezeichneten digitalen Signale anzuzeigen.
   Die aufgezeichneten Signale können mit den Referenzsignalen im Speicher 2 direkt vergleichen werden.

Die SETUP Daten werden anschließend unter einem bestimmten Dateinamen (z.B. Test 1) abgespeichert.

Fig. 4 zeigt in schematischer Weise wie erfaßte und zusammen mit der jeweiligen Zeitmarke abgespeicherte Daten zu einem späteren Zeitpunkt dargestellt werden. Dazu werden die einzelnen Daten ab dem Triggerzeitpunkt (T1, T2, T3) dargestellt. Beispielsweise können die Daten 1 der Verlauf des Digitalsignals MY2E, die Daten 2 der Drehzahlverlauf des Motors der C-Achse und die Daten 3 ein weiteres, erst ab einem späteren Zeitpunkt erfaßtes Signal sein. Dabei werden die Daten eines Signalverlaufs entsprechend ihrer jeweiligen Zeitmarke längs der Zeitachse dargestellt und damit die einzelnen Signalverläufe zueinander korreliert.

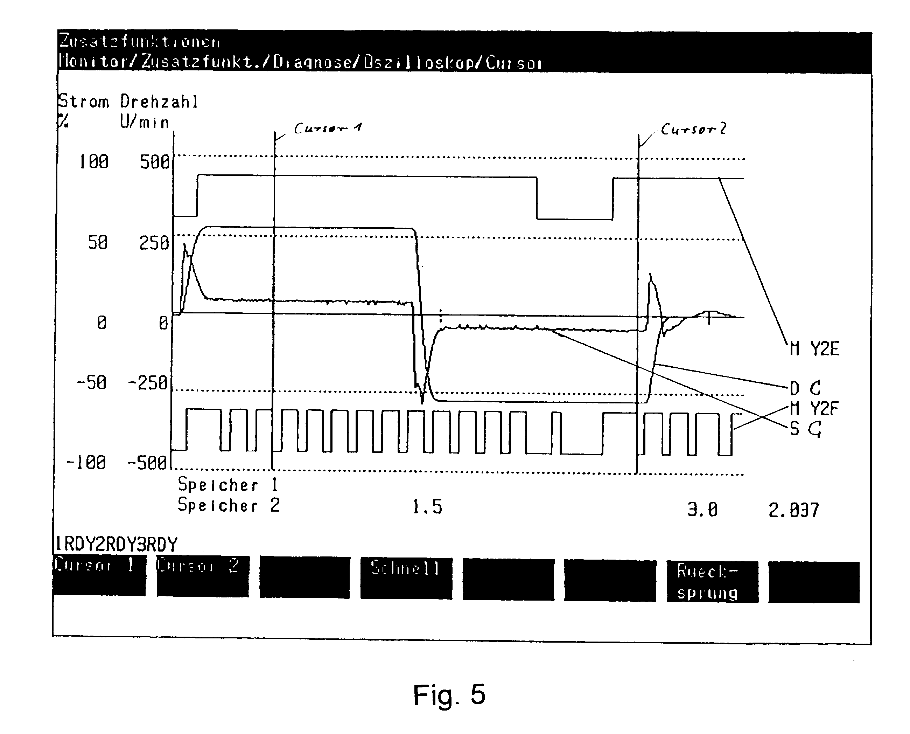

Fig. 5 zeigt eine Bildschirmdarstellung der Wiedergabe der Daten, die gemäß dem Diagnosebeispiel aus Fig. 2 erfaßt worden sind. Neben den Graphen, die die Drehzahl des Motors der C-Achse (DC) der CNC-Werkzeugmaschine wiedergibt, sowie des Graphen, der den durch den Motor fließenden Strom (SC) wiedergibt, sind auch digitale Signalverläufe (MY2E, MY2F) veranschaulicht.

Da die einzelnen Werte der jeweiligen Graphen zusammen mit entsprechenden Zeitmarkierungen gespeichert sind, besteht auch die Möglichkeit, andere, derzeit nicht dargestellte Signalverläufe in zeitlicher Relation zu einem oder mehreren der veranschaulichten Signalverläufe zu setzen und darzustellen, ohne daß eine neue Messung oder Diagnoseaufnahme gemacht werden muß.

Fig. 6 zeigt ein Menue - SETUP "SPEICHERN". In den Parametern können verschiedene Daten ausgewählt werden.

### Parameter #1 Drehzahl:

Für folgende Achsen und Spindeln ist die Aufzeichnung der Drehzahl möglich: X1, X2, Z1, Z2, Z3, V1, Y1, S1, S2, S3, S4.

### Parameter #2 Strom:

Für folgende Achsen und Spindeln ist die Aufzeichnung des Stromes möglich: X1, X2, Z1, Z2, Z3, Vl, Y1, S1, S2, S3, S4.

### Parameter #3 Digital:

Für folgende "digitale Signale" ist eine Aufzeichnung möglich:
- Merker:: M0 - M5119 (Dez)
G0 - G3071 (Dez)
- Eingänge:: X0 - X4FF (Hex)
- Ausgänge:: Y0 - Y57F (Hex)
- NC-PLC:: U0 - U17F (Hex)
I0 - I4BF (Hex)
S0 - S1FF (Hex)
W0 - W1FF (Hex)
J0 - J63F (Hex)
L0 - L255 (Hex)
R0 - R5899 (Dez) (nur für 1 oder 0 Signale verwendbar)

### Parameter #4 Trigger:

Für jedes digitale Signal ist eine Triggerbedingung einstellbar.
- 0:: (oder '') Start der Aufzeichnung, ohne Triggerbedingung.
- 1:: Start der Aufzeichnung wenn digitales Signal 1 ist.
- 2:: Start der Aufzeichnung wenn digitales Signal 0 ist.
- 3:: Start der Aufzeichnung wenn digitales Signal 0/1 Flanke ist.
- 4:: Start der Aufzeichnung wenn digitales Signal 1/0 Flanke ist.

Bei mehreren eingestellten Triggerbedingungen können diese durch logisch "UND" oder "ODER" verknüpft werden. Ist die Triggerbedingung erfüllt, so werden alle in #1 bis #3 eingestellten Daten aufgezeichnet.

### Parameter #5 Triggermodus:

- 0:: Speichern ab Triggerbedingung
- 1:: Speichern bis zur Triggerbedingung

### Parameter #6 Aktivierung:

- 0:: ohne Makro
- 1:: mit Makro

Mit Makro bedeutet die Aktivierung der Diagnose über das Makro G309 und somit die Synchronisationsmöglichkeit zum NC-Programm. Die Aufzeichnung startet aber erst ab dem G309 Makro und wenn die Triggerbedingungen von #4 erfüllt sind.

### Parameter #7 Logik:

- 0:: logische Verknüpfung "UND"
- 1:: logische Verknüpfung "ODER"

Sind unter #4 Trigger mehr als eine Triggerbedingung gesetzt, so können diese Bedingungen als Und/Oder-Verknüpfung aktiviert werden.

### Parameter #8 Zeitbereich:

Für die Aufzeichnung können folgende Zeitbereiche oder Zeitabstände (Eingabe in Sekunden) angewählt werden:
ls, 3s, 6s, 9s, 12s, ... 60s.

## Patentansprüche

1. Diagnoseeinrichtung für wenigstens eine elektronisch gesteuerte Maschine, insbesondere eine CNC-Werkzeugmaschine, eine flexible Fertigungszelle, etc. mit
einer Rechnereinheit (1, 2, 4), einem Ergebnispeichermodul (3), einer Eingabeeinheit, und einem Auswertungsmodul, wobei die Eingabeeinheit mit Aufnehmern (13-18) verbunden ist, die analoge und/oder digitale Betriebszustände der Maschine erfassen, diese in entsprechende Signale umsetzen und der Rechnereinheit zuführen, die Rechnereinheit ihr zugefügte Signale mit vorgegebenen Schlüsseln (7 - 12) verknüpft und die Verknüpfungsergebnisse dem Ergebnispeichermodul (3) und/oder dem Auswertungsmodul (4) zuführt, wobei die Betriebszustände in Zeitabständen erfaßbar sind, durch die sichergestellt ist, daß für den Betrieb der Maschine relevante Ereignisse und/oder Störungen in entsprechende Signale umgesetzt und der Rechnereinheit zugeführt werden, dadurch gekennzeichnet, daß:
- die Aufnehmer (13-18) alle vorhandenen relevanten Ereignisse und/oder Störungen der Werkzeugmaschine, deren Steuerung, und/oder von mit der Maschine oder ihrer Steuerung betrieblich verbundenen Geräte und/oder Maschinen erfassen,
- ein Konfiguratormodul (2) die Schlüssel (7-12) festlegt und die Schlüssel (7-12) in Abhängigkeit von einer Überwachungskriterien enthaltenden Konfigurationsdatei (5) erstellt,
- die Schlüssel (7-12) aus allen auftretenden Betriebszuständen die relevanten Größen auswählen und/oder verknüpfen, wobei die Schlüssel eine Reduktion der erfaßten Betriebszustände ermöglichen,
- ein Beobachtermodul (1) den Herstellungsprozeß überwacht und die erfaßten Daten und/oder Signale mit den vorgegebenen Schlüsseln verknüpft, wobei alle vorliegenden Daten und/oder Signale zeitgesteuert und/oder ereignisgesteuert überwacht werden, und
- das Auswertungsmodul (4) die Daten und/oder Signale, die für die einzelnen Betriebszustände erfaßt werden, die fehlerrelevanten Ereignisse und/oder Störungen sowie die Ergebnisse der Verknüpfungen der einzelnen Daten und/oder Signale mit den Schlüsseln zur Verfügung stellt (visualisiert), wobei die zeitlichen Zusammenhänge aller erfaßten und/oder errechneten Daten und/oder Signale erhalten bleiben.

2. Diagnoseeinrichtung nach Anspruch 1, dadurch gekennzeichnet daß:
die analogen und/oder digitalen Betriebszustände der elektronisch gesteuerten Maschine zeitgleich mit den entsprechenden fehlerrelevanten Ereignissen und/oder Störungen erfaßt und mit einer entsprechenden Zeitmarke versehen werden.

3. Diagnoseeinrichtung nach einem der Ansprüche 1 und 2, dadurch gekennzeichnet daß:
die Schlüssel die funktionalen Abhängigkeiten zwischen den erfaßten Betriebszuständen und den fehlerrelevanten Ereignissen und/oder Störungen beschreiben, wobei
die zeitlichen Zusammenhänge der erfaßten Betriebszustände mit den fehlerrelevanten Ereignissen und/oder Störungen berücksichtigt werden.

4. Diagnoseeinrichtung nach einem der Ansprüche 1 bis 3, wobei die Aufnehmer für den Betrieb der Maschine relevante Ereignisse und/oder Störungen zusammen und synchron mit in der Maschine auftretenden Betätigungssignalen für Aktoren oder Betriebsmittel der Maschine erfassen.

5. Diagnoseeinrichtung nach einem der Ansprüche 1 bis 4, wobei die Aufnehmer für den Betrieb der Maschine relevante Ereignisse und/oder Störungen der elektronischen Steuerung der Maschine, der Maschine selbst oder von mit der Maschine oder ihrer elektronischen Steuerung betrieblich verbundenen weiteren Geräte erfassen.

6. Diagnoseeinrichtung nach Anspruch 1, wobei die einzelnen Funktionen der Diagnoseeinrichtung in mehreren Tasks eines Steuerungsprogrammes, vorzugsweise verteilt auf mehrere Prioritätsebenen, implementiert sind.

7. Diagnoseeinrichtung nach Anspruch 1, wobei das Ergebnisspeichermodul (3) ein als First-In-First-Out-(FIFO)-Speicher organisiertes Speichermedium und vorzugsweise ein Permanentspeichermedium aufweist.

8. Diagnoseeinrichtung nach Anspruch 1, wobei das Auswertungsmodul (4) Betriebszustände, für den Betrieb der Maschine relevante Ereignisse und/oder Störungen, sowie Ergebnisse von Verknüpfungen in zeitlicher und funktionaler Zuordnung anzeigt oder für eine Fernübertragung verfügbar macht.

9. Diagnoseeinrichtung nach einem der Ansprüche 1 bis 8, wobei ein der elektronischen Steuerung der Maschine vorhandene Betriebsmittel zur Realisierung der Komponenten: Speichermodul (3), Auswertungsmodul (4), und/oder Beobachtermodul (1) genutzt werden.

10. Diagnoseeinrichtung nach einem der vorhergehenden Ansprüchen, wobei die Aufzeichnung von Betriebszuständen, für den Betrieb der Maschine relevanten Ereignissen und/oder Störungen in Abhängigkeit von jeweiligen analogen oder digitalen Signalpegeln und/oder Signalflanken erfolgt.

11. Diagnoseeinrichtung nach einem der vorhergehenden Ansprüche, wobei die Auswertung unter Zugrundelegung von deterministischer Logikregeln bzw. Zustandsgraphen, oder von Regeln der unscharfen Logik (Fuzzy-Algorithmen, Neuronale Netze oder dergl.) erfolgt.

12. Diagnoseeinrichtung nach einem der Ansprüche 1 bis 11, wobei das Konfiguratormodul die Schlüssel (7 - 12) so festlegt, daß aufzuzeichnende Signale in Abhängigkeit von ihrer Art, ihrem Inhalt, ihrem funktionalen oder zeitlichen Bezug zu anderen Ereignissen bestimmt werden.

13. Diagnoseeinrichtung nach einem der vorhergehenden Ansprüche, wobei das Konfiguratormodul (2) die Schlüssel (7 -12) so bestimmt, daß aufzuzeichnende digitale Signale und zugehörige analoge Signale zeitgleich erfaßt werden.

14. Diagnoseeinrichtung nach einem der vorhergehenden Ansprüche, wobei die zu deren Realisierung erforderlichen Betriebsmittel in die elektronische Steuerung der Maschine integriert sind und ohne ändernde Eingriffe in die Struktur der Maschinensteuerung aktivierbar ist.

15. Diagnoseeinrichtung nach einem der vorhergehenden Ansprüche, wobei die zu deren Realisierung erforderlichen Betriebsmittel durch eine Datenfernübertragungseinrichtung de/aktivierbar, re/konfigurierbar und abfragbar sind, wobei die Auswertung zu einem von der Erfassung der Meßgrößen und/oder Daten unabhängigen Zeitpunkt erfolgt.

16. Diagnoseeinrichtung nach einem der vorhergehenden Ansprüche, die Kennkarten erstellt, die die von dem Auswertungsmodul (4) zur Verfügung gestellten Daten und/oder Signale enthalten.

## Claims

1. A diagnostic apparatus for at least one electronically controlled machine, in particular, a CNC machine tool, a flexible manufacturing cell, etc. comprising:
a computer unit (1, 2, 4), a result memory module (3), an input unit and an evaluation module, wherein the input unit is connected with sensors (13 - 18) which sense analog and/or digital operating conditions of the machine, convert same to corresponding signals and supply same to the computer unit, the computer unit links the supplied signals with pregiven codes (7 - 12) and supplies the linking results to the result memory module (3) and/or the evaluation module (4), with the operating conditions being sensed in intervals which ensure that events and/or malfunctions which are relevant for the operation of the machine are converted to corresponding signals and supplied to the computer unit, characterised in that
- the sensors (13 - 18) sense all existing, relevant events and/or malfunctions of the machine tool, of its control unit and/or of devices and/or machines which are operatively connected with the machine or its control unit;
- a configuration module (2) establishes the codes (7 - 12) and generates the codes (7 - 12) as a function of a configuration file (5) which includes monitoring criteria;
- the codes (7 - 12) select and/or link the relevant values from all occurring operating conditions, with the codes enabling a reduction of the sensed operating conditions;
- an observer module (1) which monitors the manufacturing process and links the sensed data and/or signals with the pregiven codes, with all present data and/or signals being monitored in a time-controlled and/or event-controlled manner; and
- the evaluation module (4) provides (visualises) the data and/or signals which are sensed for the individual operating conditions, the error relevant events and/or malfunctions as well as the results of the linking operations of the individual data and/or signals with the codes, with the time contexts of all sensed and/or calculated data and/or signals being maintained.

2. The diagnostic apparatus according to Claim 1, characterised in that
the analog and/or digital operating conditions of the electronically controlled machine are sensed simultaneously with the corresponding error relevant events and/or malfunctions and are provided with a corresponding time flag.

3. The diagnostic apparatus according to one of Claims 1 and 2, characterised in that
the codes describe the functional dependencies between the sensed operating conditions and the error relevant events and/ or malfunctions, with the time contexts of the sensed operating conditions together with the error relevant events and/or malfunctions being taken into consideration.

4. The diagnostic apparatus according to one of Claims 1 to 3, wherein the sensors sense events and/or malfunctions which are relevant for the operation of the machine together and in synchronism with activating signals for actuators or resources of the machine.

5. The diagnostic apparatus according to one of Claims 1 to 4, wherein the sensors sense events and/or malfunctions of the electronic control unit of the machine, of the machine itself, or of further devices with are operatively connected with the machine or its electronic control unit, which are relevant for the operation of the machine.

6. The diagnostic apparatus according to Claim 1, wherein the individual functions of the diagnostic apparatus are implemented in several tasks of a control program, preferably distributed in several priority levels.

7. The diagnostic apparatus according to Claim 1, wherein the result memory module (3) comprises a storage medium organised as a first-in-first-out (FIFO) memory and preferably a permanent storage medium.

8. The diagnostic apparatus according to Claim 1, wherein the evaluation module (4) displays operating conditions, events and/or malfunctions which are relevant for the operation of the machine as well as results of linking operations in a time and functional association or makes them available for a teletransmission.

9. The diagnostic apparatus according to one of Claims 1 to 8, wherein resources provided in the electronic control unit of the machine are utilized for the realisation of the components: memory module (3), evaluation module (4) and/or observer module (1).

10. The diagnostic apparatus according to one of the previous claims, wherein the recording of operating conditions, of events and/or malfunctions which are relevant for the operation of the machine is carried out as a function of the respective analog or digital signal levels and/or signal edges.

11. The diagnostic apparatus according to one of the previous claims, wherein the evaluation is effected on the basis of deterministic logic rules or status graphs, respectively, or on rules of the fuzzy logic (fuzzy algorithms, neuronal networks or the like).

12. The diagnostic apparatus according to one of Claims 1 to 11, wherein the configurator module establishes the codes (7 - 12) in such a manner that signals to be recorded are determined dependent on their type, their contents, their functional and time relation to other events.

13. The diagnostic apparatus according to one of the previous claims, wherein the configurator module (2) establishes the codes (7 - 12) in such a manner that digital signals to be recorded and associated are analog signals are sensed simultaneously.

14. The diagnostic apparatus according to one of the previous claims, wherein the resources which are necessary for its realisation are integrated in the electronic control unit of the machine and are capable of being activated without modifying interventions into the structure of the machine control system.

15. The diagnostic apparatus according to one of the previous claims, wherein the resources which are necessary for its realisation are capable of being de/activated, re/configured and interrogated by means of a data communication means, with the evaluation being effected at an instant which is independent of the sensing of the measured quantities and/or data.

16. The diagnostic apparatus according to one of the previous claims, which generates chracteristics cards which include the data and/or signals provided by the evaluation module (4).

## Revendications

1. Dispositif de diagnostic pour au moins une machine commandée électroniquement, en particulier une machine outil commandée numériquement par ordinateur, une cellule de fabrication, etc. comprenant
une unité d'ordinateur (1, 2, 4), un module de mémoire de résultat (3), une unité d'entrée et un module d'évaluation, l'unité d'entrée étant reliée à des capteurs (13-18) qui détectent des états de fonctionnement analogiques et / ou numériques de la machine, convertissent ceux-ci en signaux correspondants et les transmettent à l'unité d'ordinateur, l'unité d'ordinateur combinant des signaux qui lui sont transmis avec des clés données à l'avance (7 - 12) et transmettant les résultats de la combinaison au module de mémoire de résultat (3) et / ou au module d'évaluation, les états de fonctionnement pouvant être saisis à des intervalles de temps tels qu'on soit assuré que des incidents et / ou dérangements importants pour le fonctionnement de la machine soient convertis en signaux correspondants et soient transmis à l'unité d'ordinateur, caractérisé en ce que :
- les capteurs (13-18) détectent tous les incidents et / ou dérangements importants de la machine outil, de sa commande, et / ou d'appareils et / ou de machines liés fonctionnellement avec la machine ou sa commande,
- un module de configurateur (2) spécifie les clés (7-12) et réalise les clés (7-12) en fonction d'un fichier de configurations (5) contenant des critères de surveillance,
- les clés (7-12) choisissent et / ou combinent à partir de tous les états de fonctionnement les grandeurs importantes, les clés permettant une réduction des états de fonctionnement saisis,
- un module d'observation (1) surveille le processus de fabrication et combine les données et / ou les signaux saisis, tous les données et / ou signaux présents étant surveillés par commande temporelle ou par commande incidentielle, et
- le module d'évaluation (4) met à disposition (visualise) les données et / ou les signaux qui sont saisis pour les états de fonctionnement individuels, les incidents et / ou dérangements importants pour les erreurs ainsi que les résultats des combinaisons des données et / ou signaux individuels avec les clés, les relations temporelles de tous les données et / ou signaux saisis et / ou calculés étant conservées.

2. Dispositif de diagnostic selon la revendication 1, caractérisé en ce que
les états de fonctionnement analogiques et / ou numériques de la machine commandée électroniquement sont saisis simultanément avec les incidents et / ou dérangements importants pour les erreurs correspondants et sont pourvus d'une datation correspondante.

3. Dispositif de diagnostic selon la revendication 1 ou 2, caractérisé en ce que
les clés décrivent les dépendances fonctionnelles entre les états de fonctionnement saisis et les incidents et / ou dérangements importants pour les erreurs,
les relations temporelles des états de fonctionnement saisis avec les incidents et / ou dérangements importants pour les erreurs étant pris en considération.

4. Dispositif de diagnostic selon l'une quelconque des revendications 1 à 3, dans lequel les capteurs relèvent des incidents et / ou dérangements importants pour le fonctionnement de la machine ensemble avec et en même temps que des signaux d'actionnement apparaissant dans la machine pour des acteurs ou des éléments du système de la machine.

5. Dispositif de diagnostic selon l'une quelconque des revendications 1 à 4, dans lequel les capteurs relèvent les incidents et / ou dérangements importants pour le fonctionnement de la machine, de la commande électronique de la machine, de la machine elle-même ou d'autres appareils reliés fonctionnellement à la machine ou à sa commande électronique.

6. Dispositif de diagnostic selon la revendication 1, dans lequel les fonctions individuelles du dispositif de diagnostic sont mises en oeuvre dans plusieurs tâches d'un programme de commande, de préférence réparties sur plusieurs niveaux de priorité.

7. Dispositif de diagnostic selon la revendication 1, dans lequel le module de mémoire de résultat (3) est un support de mémoire organisé en système premier entré premier sorti (FIFO) et présente de préférence un support de mémoire rémanent.

8. Dispositif de diagnostic selon la revendication 1, dans lequel le module d'évaluation (4) indique ou met à disposition pour une télétransmission des états de fonctionnement, des incidents et / ou des dérangements importants pour le fonctionnement de la machine ainsi que des résultats de combinaisons en coordination temporelle et fonctionnelle.

9. Dispositif de diagnostic selon l'une quelconque des revendications 1 à 8, dans lequel un des éléments de système présents de la commande électronique de la machine sont utilisés pour réaliser les composants : module de mémoire (3), module d'évaluation (4), et / ou module d'observation (1).

10. Dispositif de diagnostic selon l'une quelconque des revendications précédentes, dans lequel le relevé d'états de fonctionnement, d'incidents et / ou de dérangements importants pour le fonctionnement de la machine a lieu en fonction de niveaux respectifs de signaux analogiques ou numériques et / ou de flancs de signaux.

11. Dispositif de diagnostic selon l'une quelconque des revendications précédentes, dans lequel l'évaluation a lieu sur la base de règles de logique déterministe respectivement de graphes d'état ou de règles de logique floue (algorithmes flous, réseaux neuronaux ou similaires).

12. Dispositif de diagnostic selon l'une quelconque des revendications 1 à 11, dans lequel le module de configurateur détermine les clés (7 - 12) de telle façon que les signaux à relever sont déterminés en fonction de leur nature, leur contenu, leur relation fonctionnelle ou temporelle à d'autres incidents.

13. Dispositif de diagnostic selon l'une quelconque des revendications précédentes, dans lequel le module de configurateur (2) détermine les clés (7 - 12) de telle façon que des signaux numériques à relever et des signaux analogiques associés soit saisis simultanément.

14. Dispositif de diagnostic selon l'une quelconque des revendications précédentes, dans lequel les éléments de système nécessaires à sa réalisation sont intégrés dans la commande électronique de la machine et peuvent être activés sans interventions de modification dans la structure de la commande de machine.

15. Dispositif de diagnostic selon l'une quelconque des revendications précédentes, dans lequel les éléments de système nécessaires à sa réalisation peuvent être dés/activés, re/configurés et interrogés par l'intermédiaire d'un dispositif de télétransmission de données, l'évaluation ayant lieu à un instant indépendant de la saisie des grandeurs de mesure et / ou des données.

16. Dispositif de diagnostic selon l'une quelconque des revendications précédentes qui réalise des cartes caractéristiques qui contiennent les données et / ou les signaux mis à disposition par le module d'évaluation (4).
